# EUROPÄISCHE PATENTSCHRIFT

(11) **EP 3 636 967 B1**
(45) Veröffentlichungstag und Bekanntmachung des Hinweises auf die Patenterteilung: **16.12.2020**
(21) Anmeldenummer: 19197917.8
(22) Anmeldetag: 18.09.2019
(51) Int. Cl.: F16J 15/26, F16J 15/56

(54) **ÖLABSTREIFRING FÜR EINE KOLBENSTANGE**
OIL SCRAPING RING FOR A PISTON ROD
ANNEAU DÉFLECTEUR D'HUILE POUR UNE TIGE DE PISTON

(30) Priorität: 20.09.2018 AT 508082018
(43) Veröffentlichungstag der Anmeldung: 15.04.2020
(73) Patentinhaber: Hoerbiger Wien GmbH, 1220 Wien (AT)
(72) Erfinder: Janko-Grasslober, Marian, 1100 Wien (AT); Lagler, Martin, 1220 Wien (AT); Kaufmann, Andreas, 1220 Wien (AT)
(74) Vertreter: Patentanwälte Pinter & Weiss OG

(56) Entgegenhaltungen:
- EP-A1- 0 473 737
- EP-A1- 2 570 705
- CN-U- 205 225 624
- DE-C- 560 789

## Beschreibung

Die Erfindung betrifft einen Abstreifring zum Abstreifen von Öl von einer translatorisch oszillierenden Kolbenstange mit zumindest einer an der radial außenliegenden Umfangsfläche vorgesehenen Außenumfangsnut zur Aufnahme einer Ringfeder zum radialen Vorspannen des Abstreifrings, wobei an der radial innenliegenden Umfangsfläche des Abstreifrings eine Mehrzahl von Dichtabschnitten mit jeweils einer Abstreifkante vorgesehen ist, wobei benachbarte Dichtabschnitte jeweils durch eine Innenumfangsnut axial voneinander beabstandet sind, wobei am Umfang des Abstreifrings zumindest eine, den Abstreifring radial durchdringende Ausnehmung vorgesehen ist, die sich zumindest teilweise von einem ersten axialen Ringende des Abstreifrings bis zu einem zweiten axialen Ringende des Abstreifrings erstreckt, um zumindest im Bereich mehrerer Dichtabschnitte am ersten axialen Ende des Abstreifrings eine Verstellbarkeit des Abstreifrings in Umfangsrichtung zu erzeugen, wobei die Ausnehmung zumindest abschnittsweise in einer von der axialen Richtung des Abstreifrings abweichenden Richtung verläuft, wobei an der äußeren Umfangsfläche des Abstreifrings zumindest eine Drainageöffnung vorgesehen ist, die mit zumindest einer Innenumfangsnut verbunden ist, um abgestreiftes Öl von den Innenumfangsnuten abzuführen. Weiters betrifft die Erfindung eine Dichtpackung sowie einen Kolbenkompressor.

Insbesondere bei großen relativ langsam laufenden Hubkolbenmaschinen wie z.B. ErdgasKompressoren oder Groß-Gas-/ bzw. Dieselmotoren kommt beim Kurbeltrieb vorwiegend das sogenannte Kreuzkopf-Konzept zu Anwendung. Der Kreuzkopf ist ein Gelenk, das eine mit dem Kolben verbundene, rein translatorisch oszillierende Kolbenstange mit einer kombiniert translatorisch/rotatorisch oszillierenden Schubstange koppelt. Der Kreuzkopf ist starr mit der Kolbenstange und dem Kolben verbunden und wird in der Regel durch eine eigene Führung im Kurbelgehäuse gelagert. Die Vorteile dieses Konzeptes sind beispielsweise, dass ein doppelt wirkender Kolben verwendet werden kann, der im gleichen Zylinder an zwei Seiten Arbeit verrichtet oder dass aufgrund der räumlichen Trennung von Zylinder und Kurbelgehäuse verschiedene Schmierstoffe zur Schmierung des Kolbens und der Kurbelwelle verwendet werden können (bei Kompressoren auch trockenlaufende Kolben). Aufgrund der rein translatorischen Bewegung der Kolbenstange ist der Kolben auch frei von Seitenkräften, weshalb es zu keinem Kolbenkippen im oberen Totpunkt kommt; der Kolben kann folglich im Vergleich zu Konzepten mit direkter Anbindung der Schubstange an den Kolben konstruktiv einfacher ausgeführt werden.

In Kolbenkompressoren befindet sich im Kurbelkasten in der Regel Schmieröl zum Schmieren der beweglichen Teile des Kolbenkompressors, insbesondere des Kurbeltriebs. Das Schmieröl gelangt dabei auch auf die Kolbenstange und würde entlang der Kolbenstange bis in den Kompressionsraum im Zylinder transportiert werden, was unerwünscht ist, da dies zum einen eine signifikante Ölleckage und einen damit verbundenen Ölverlust darstellt. Zum anderen würde das Schmieröl zum Teil auch mit dem Kompressionsmedium abgeführt werden und dieses verunreinigen. Um dies zu vermeiden sind im Bereich der Kolbenstange in der Regel mehrere sogenannte (ÖI-)Abstreifringe vorgesehen, die den Ölfilm auf der Kolbenstange abstreifen sollen. Oftmals werden sogenannte Ölabstreif-Packungen verwendet, die mehrere Ölabstreifringe beinhalten. Für eine verbesserte Abstreifwirkung werden in der Regel mehrere Abstreifringe pro Packung benötigt, die mittels geeigneter Stützringe abgestützt werden, um von der oszillierenden Kolbenstange nicht beschädigt, insbesondere in den Spalt zwischen Kolbenstange und Abstreifpackung extrudiert zu werden. Solche Ausführungen sind relativ aufwändig und daher kostenintensiv. Zudem ist man aufgrund der seriellen Anordnung mehrerer Abstreifringe mit dazwischenliegenden Stützringen in der Reduktion der Baugröße limitiert, was nachteilig ist.

Oftmals werden Abstreifringe auch in sogenannten Dichtpackungen eingebaut. In einer Dichtpackung ist eine Anzahl von Dichtringen vorgesehen, durch die die Kurbelstange durchgeführt wird und die den Kurbelkasten gegenüber dem Kompressionsraum abdichten. Solche Dichtpackungen und Dichtringe in den verschiedensten Ausführungen sind hinlänglich bekannt.

Bisher bekannte Abstreifringe sind z.B. metallische radial geschnittene Ringe mit einer scharfen Abstreifkante, die die Kolbenstange in Umfangsrichtung umfassen und berühren. Solche geschnittenen Abstreifringe werden durch eine am Umfang umlaufende Ringfeder zusammengehalten und durch diese aktiviert, d.h. die Ringfeder erzeugt einen radialen Anpressdruck, um eine ordnungsgemäße Funktion des Abstreifringes zu ermöglichen. Um die radialen Schnitte abzudichten werden häufig zwei radial geschnittene Ringe verwendet und in Umfangsrichtung versetzt zueinander angeordnet und gegen Verdrehen gesichert. Ebenso sind Anordnungen aus einem radial und einem tangential geschnittenem Abstreifring bekannt. Bei der Verwendung von zwei versetzten Ringen deckt in manchen Fällen nur eine Abstreifkante eine andere ab, bzw. sind je Ring zwei Abstreifkanten vorhanden decken dementsprechend nur die zwei folgenden Abstreifkanten den Spalt des ersten Rings ab, was zu einer erhöhten Ölleckage führen kann. Auch die zusätzlichen Fertigungs- und Montageaufwände bei der Ausführung als Baugruppe mit mehreren Ringen, die gegeneinander verdrehgesichert werden müssen, stellt eine zusätzliche Fehlerquelle klassischer Abstreiflösungen dar.

Herkömmliche Abstreifringe weisen in der Regel Öldrainagebohrungen und/oder Öldrainagenuten am Umfang auf, um das abgestreifte Öl abzuführen. Oftmals sind diese aber zu klein dimensioniert, was zu einem Rückstau bzw. fortwährenden Benetzung der Kolbenstange durch das bereits abgestreifte Schmieröl führt, welches die nächste Abstreifkante in ihrer Ölabstreifleistung mindert.

Ein weiteres Problem solcher metallischer Abstreifringe ist darin zu sehen, dass die scharfe Abstreifkante an der Kolbenstange kratzt und diese beschädigen kann. Daher muss die Abstreifkante auch mit sehr exakten Fertigungstoleranzen gefertigt werden, um eine übermäßige Beschädigung der Kolbenstange zu verhindern. Das erhöht aber den Fertigungsaufwand herkömmlicher Abstreifringe.

Abstreifringe sind häufig in irgendeiner Art geteilt ausgeführt, um eine Verschleißnachstellung zu ermöglichen, eine entstehende Wärmeausdehnung kompensieren zu können, um einfach auf die Kolbenstange montiert werden zu können und um eine gleichmäßige Abstreifwirkung entlang des Umfangs der Kolbenstange gewährleisten zu können. Es gibt aber auch ungeschnittene Abstreifringe. Diese Ringe leiden aber immer unter den Problemen, Verschleiß nicht oder nur beschränkt nachstellen zu können und Wärmeausdehnungen aufgrund unterschiedlicher Wärmeausdehnungskoeffizienten des Materials der Kolbenstange und des Abstreifringes nur unzureichend kompensieren zu können.

Die genannten Abstreifringe sind z.B. aus der EP 2 369 205 B1, der EP 2 360 400 B1, der US 3,542,374 A bekannt. Eine Dichtpackung mit Abstreifring zeigt beispielsweise die WO 2010/079227 A1 oder die EP 2 489 907 B1. Weitere Ölabstreifringe mit einen oder mehreren der genannten Nachteile sind aus der EP 0 473 737 B1, DE 560 789 C, EP 2 570 705 A1 (die einen Abstreifring gemäß dem Oberbegriff des Anspruchs 1 zeigt), CN 205225624 U sowie der GB 995,683 bekannt. Die DE 195 05 404 B4 zeigt einen Dichtring für drehende Wellen.

Demzufolge ist es eine Aufgabe der gegenständlichen Erfindung, einen Abstreifring anzugeben, der die genannten Nachteile beseitigt. Insbesondere soll eine Reduzierung der verwendeten Ringe je Abstreifpackung ermöglicht werden und es soll eine Ölleckage in den Zylinder vermieden werden. Weiters soll eine ausreichende Abfuhr des abgestreiften Schmieröls ermöglicht werden sowie eine oberflächliche Beschädigung der Kolbenstange durch den Abstreifring vermieden werden.

Erfindungsgemäß wird die Aufgabe dadurch gelöst, dass sich die zumindest eine Drainageöffnung nutförmig vom ersten axialen Ringende des Abstreifrings teilweise in Richtung des zweiten axialen Ringendes erstreckt und mit mehreren Innenumfangsnuten verbunden ist. Der erfindungsgemäße Abstreifring kann dadurch je nach Anzahl der Dichtabschnitte mehrere axial hintereinander angeordnete separate Abstreifringe ersetzen. Da die Dichtabschnitte des Abstreifrings miteinander verbunden sind, ist keine separate Verdrehsicherung wie bei separaten Abstreifringen im Stand der Technik erforderlich. Durch die nutförmige Drainageöffnung kann das Abführen von Öl verbessert und die Herstellung des Abstreifrings vereinfacht werden.

Vorzugsweise erstreckt sich die Ausnehmung durchgehend vom ersten axialen Ringende bis zum zweiten axialen Ringende des Abstreifrings, wobei der Abstreifring durch die zumindest eine Ausnehmung zumindest einmal vollständig unterbrochen ist. Dadurch, dass der Abstreifring zumindest einmal unterbrochen ist, wird eine einfache Montage des Abstreifrings an der Kolbenstange ermöglicht, ohne die Kolbenstange vom Kreuzkopf lösen zu müssen und die Verstellbarkeit in Umfangsrichtung wird verbessert, wodurch ein Verschleiß des Abstreifrings besser kompensiert werden kann.

Vorzugsweise sind aber zumindest zwei Ausnehmungen vorgesehen, durch die der Abstreifring zumindest zweimal vollständig unterbrochen ist, wobei die zumindest zwei Ausnehmungen vorzugsweise in konstanten Winkelabständen voneinander beabstandet am Umfang des Abstreifrings vorgesehen sind. Dadurch wird der Abstreifring in zumindest zwei Ringsegmente unterteilt, wodurch der Abstreifring leichter an der Kolbenstange montiert werden kann. Zudem wird durch die zumindest zwei Ringsegmente die Verschleißnachstellung bei fortlaufendem Verschleiß des Abstreifrings verbessert, der aus der Relativbewegung zwischen Kolbenstange und Abstreifring resultiert.

Bevorzugterweise verläuft zumindest eine Ausnehmung helixförmig entlang der äußeren Umfangsfläche des Abstreifrings, wobei die Steigung der Helix vorzugsweise zwischen 0,1 und 10 beträgt. Dadurch ergibt sich eine kontinuierliche Überdeckung der Dichtabschnitte, was zu einer guten Abstreifwirkung und einer geringen Leckage führt.

Gemäß einer vorteilhaften Ausgestaltung verläuft zumindest eine Ausnehmung stufenförmig oder labyrinthförmig, wobei die Ausnehmung vorzugsweise zumindest drei axial verlaufende Ausnehmungsabschnitte und vorzugsweise zumindest zwei in Umfangsrichtung verlaufende Ausnehmungsabschnitte aufweist, die abwechselnd angeordnet sind. Dadurch wird die Ölabstreifwirkung weiter verbessert und die Leckage reduziert.

Vorzugsweise sind zumindest zwei Drainageöffnungen am äußeren Umfang des Abstreifrings vorgesehen. Dadurch wird gewährleistet, dass eine ausreichend große Menge Schmieröl von innen radial nach außen abgeführt werden kann.

Bevorzugterweise verläuft zumindest eine Drainageöffnung helixförmig, wodurch das Abführen von Schmieröl verbessert wird.

Wenn zumindest eine Drainageöffnung parallel zur zumindest einen Ausnehmung verläuft, können die Drainageöffnungen an den Verlauf der Ausnehmungen angepasst werden, wodurch eine gleichmäßige Verteilung von Ringmaterial am Umfang des Abstreifrings erreicht werden kann.

Der Abstreifring ist vorzugsweise aus Kunststoff hergestellt, wodurch eine einfache Herstellung ermöglicht wird und gewährleistet wird, dass die Oberfläche der Kolbenstange vom Abstreifring nicht beschädigt wird.

Vorteilhafterweise ist der Abstreifring mittels eines spanenden Fertigungsverfahrens herstellbar, vorzugsweise mittels Fräsen und/oder mittels eines generativen Fertigungsverfahrens herstellbar, vorzugsweise mittels 3D-Druck, selektivem Lasersintern oder Stereolithografie.

Die gegenständliche Erfindung wird nachfolgend unter Bezugnahme auf die Figuren 1 bis 8e näher erläutert, die beispielhaft, schematisch und nicht einschränkend vorteilhafte Ausgestaltungen der Erfindung zeigen. Dabei zeigt
Fig.1 einen Kolbenkompressor,
Fig.2 einen Abstreifring einer bevorzugten Ausgestaltung in isometrischer Ansicht,
Fig.3 einen Abstreifring einer bevorzugten Ausgestaltung in Seitenansicht,
Fig.4 eine bevorzugte Ausgestaltung einer Ausnehmung des Abstreifrings,
Fig.5a-5c bevorzugte Ausgestaltungen der Ausnehmung des Abstreifrings,
Fig.6 einen Querschnitt eines Abstreifrings,
Fig.7 eine bevorzugte Ausgestaltung einer Drainageöffnung des Abstreifrings,
Fig.8a-e verschiedene Querschnittsformen eines Dichtabschnitts mit Abstreifkante.

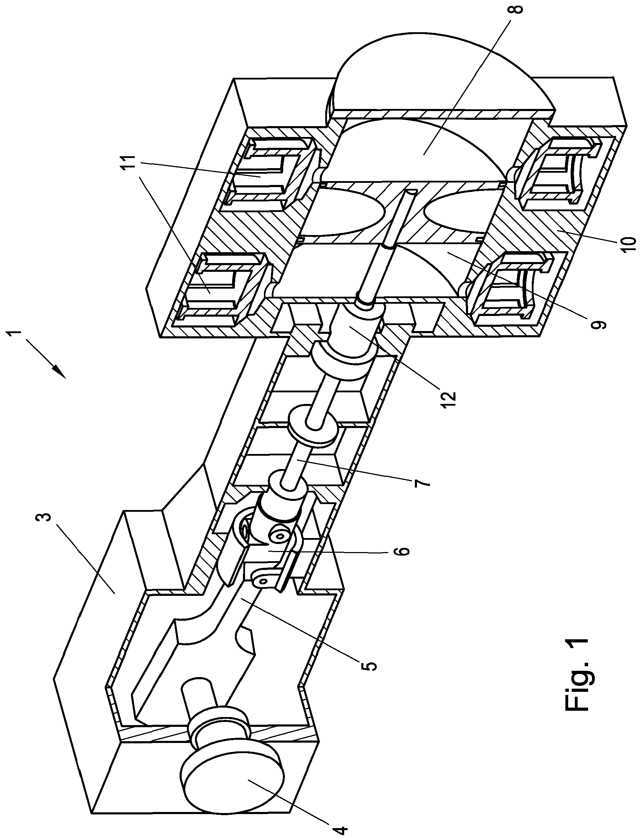

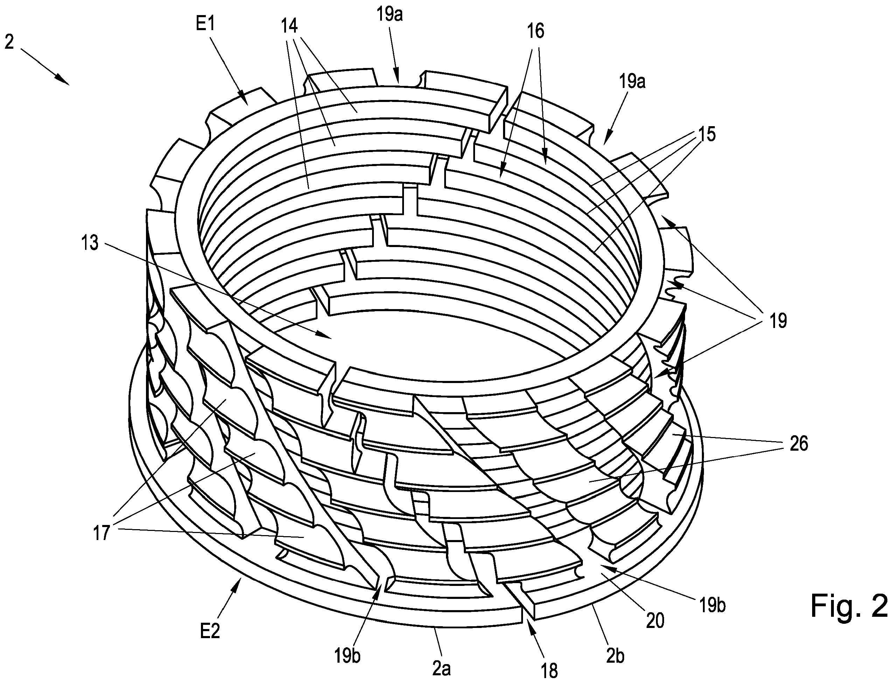

In Fig.1 ist beispielhaft ein Kolbenkompressor 1 dargestellt, bei dem der erfindungsgemäße Abstreifring 2 (siehe Fig.2) zur Anwendung kommen kann. Der Kolbenkompressor 1 weist ein Kompressorgehäuse 3 (Kurbelkasten) auf, in dem eine Kurbelwelle 4 drehbar gelagert ist. Eine Schubstange 5 ist mit einem Ende drehbar an einem sogenannten (nicht dargestellten) Hubzapfen der Kurbelwelle 4 drehbar gelagert und mit dem anderen Ende drehbar an einem Kreuzkopf 6 angeordnet. Der Kreuzkopf ist axial beweglich im Kompressorgehäuse 3 gelagert und ist vorgesehen, die, aufgrund der rotativen und translativen Oszillation der Schubstange 5 auf den Kreuzkopf 6 wirkenden Seitenkräfte radial am Kompressorgehäuse 3 abzustützen. Am Kreuzkopf 6 ist ein Ende einer Kolbenstange 7 angeordnet, das gegenüberliegende Ende ist mit einem Kolben 8 verbunden, der in einer Zylinderbuchse 9 eines Zylinders 10 angeordnet ist. Vom Kreuzkopf 6 wird nur mehr eine translatorische Bewegung über die Kolbenstange 7 an den Kolben 8 übertragen, wodurch der Kolben 8 eine im Wesentlichen rein translatorisch oszillierende Bewegung in der Zylinderbuchse 9 ausführt, ohne dass radiale Seitenkräfte auf die Zylinderbuchse 9 wirken. Der Kolbenkompressor 1 ist im dargestellten Beispiel als doppelt wirkender Kompressor ausgeführt, das bedeutet, dass im Zylinder 10 an beiden axialen Seiten des Kolbens 8 Kompressionsarbeit verrichtet wird. Natürlich könnte auch ein einfach wirkender Kompressor verwendet werden oder eine andere Kolbenmaschine wie z.B. ein Verbrennungsmotor. Am Zylinder 10 sind radial außenliegend Saug- und Druckventile 11 vorgesehen, welche für das Zuführen von zu komprimierendem Medium zum Zylinder 10 (Saugventil) und Abführen von komprimiertem Medium vom Zylinder 10 (Druckventil) vorgesehen sind. Die Saug- und Druckventile 11 können aber natürlich auch anders ausgeführt sein und auch woanders angeordnet sein.

Zwischen Zylinder 10 und Kompressorgehäuse 3 ist in der Regel eine Dichtpackung 12 vorgesehen, welche dazu dient, den hohen Druck im Zylinder gegenüber dem relativ dazu geringeren Druck im Kompressorgehäuse 3 abzudichten. Diese Dichtpackung 12 umfasst in der Regel eine Anzahl von axial hintereinander angeordneten Dichtringen, z.B. in bekannter Weise gebildet aus radial und/oder tangential geschnittenen oder segmentierten Packungsringen eventuell in Kombination mit Stützringen, die jeweils in einer Kammerscheibe angeordnet sind. Die Dichtpackung 12 könnte, an einer Stirnseite oder beidseitig, auch noch einen axialen Abschluss, z.B. in Form einer ringförmigen Scheibe, aufweisen. Weiters weisen solche Dichtpackungen 12 der Kolbenstange 7 in der Regel mehrere axial hintereinander angeordnete Abstreifringe auf. Die Abstreifringe können aber auch in einer eigenen Abstreifpackung und getrennt von der Dichtpackung angeordnet sein. Diese dienen dazu, um zu vermeiden, dass das zur Schmierung der bewegten Teile im Kurbelkasten, insbesondere der Kurbelwelle 4 und der Schubstange 5 verwendete Schmieröl, das an der Kolbenstange 7 haftet, nicht in den Zylinder 10 gelangt. Dies dient dazu, dass das komprimierte Medium nicht durch Schmieröl verunreinigt wird, was insbesondere bei Erdgaskompressoren und Luftkompressoren, aber auch bei trockenlaufenden Kompressoren, wichtig ist. Durch den Abstreifring wird das an der Kolbenstange 7 haftende Schmieröl bei der Relativbewegung zwischen Kolbenstange 7 und Abstreifringen abgestreift. Das abgestreifte Schmieröl kann dann gesammelt und ggf. wieder dem Kurbelkasten zur Schmierung zugeführt werden. Um diese Abstreifwirkung zu verbessern ist erfindungsgemäß ein Abstreifring 2 vorgesehen, der in einer bevorzugten Ausgestaltung nachfolgend anhand Fig.2 näher beschrieben wird.

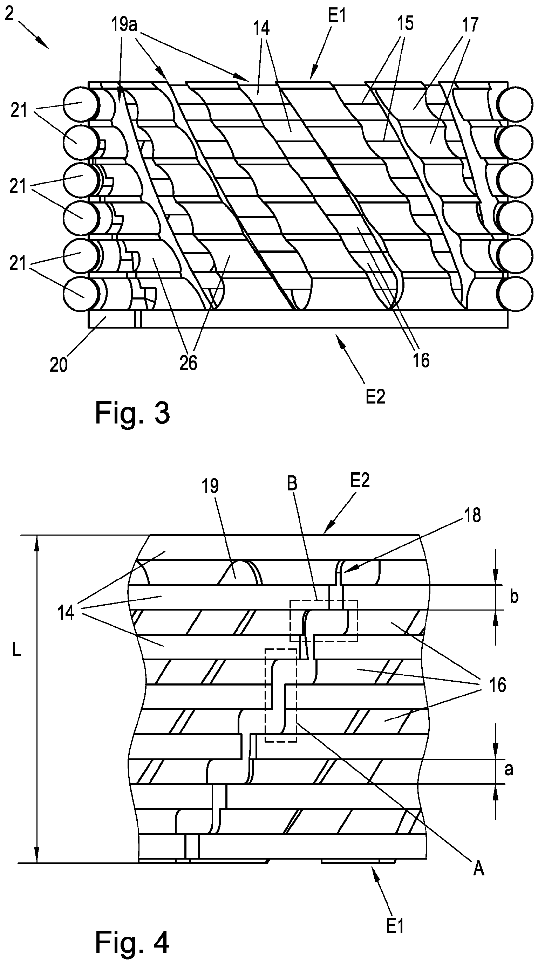

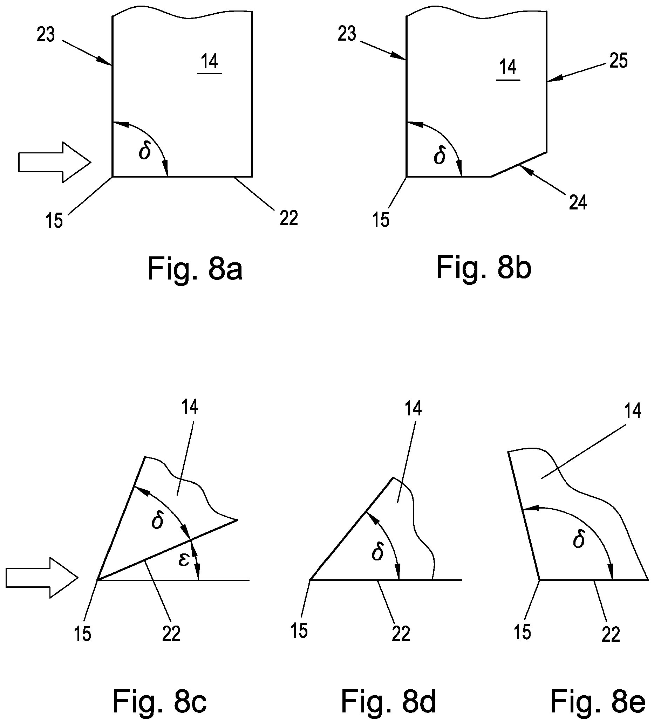

Der Abstreifring 2 in Fig.2 weist eine zentrale zylindrische Öffnung 13 auf, in der im montierten Zustand die Kolbenstange 7, beispielsweise des Kolbenkompressors 1, durchgeführt ist und im Betrieb translatorisch oszilliert. An der radial innenliegenden Umfangsfläche des Abstreifrings 2 sind zumindest drei Dichtabschnitte 14 mit jeweils einer Abstreifkante 15 zum Abstreifen von Öl von der Kolbenstange 7 vorgesehen. In Verwendung des Abstreifringes 2 sind die Abstreifkanten 15 in der Regel der ölführenden Seite zugewandt, hier beispielsweise dem Kurbelkasten zugewandt. Die Dichtabschnitte 14 sind durch Innenumfangsnuten 16 axial voneinander beabstandet. Zur Verbesserung der Abstreifwirkung können natürlich auch mehr als drei Dichtabschnitte 14 vorgesehen werden, im dargestellten Ausführungsbeispiel weist der Abstreifring 2 z.B. sieben Dichtabschnitte 14 auf. Dabei ist zu beachten, dass eine Erhöhung der Anzahl der Dichtabschnitte 14 (bei gleichbleibender Dichtabschnittsbreite b - siehe Fig.4) auch die axiale Baulänge des Abstreifrings 2 erhöht. An der radial außenliegenden Umfangsfläche des Abstreifrings 2 ist in bekannter Weise zumindest eine Außenumfangsnut 17 vorgesehen, welche zur Aufnahme einer (nicht dargestellten) Ringfeder zum radialen Vorspannen des Abstreifrings 2 an der Kolbenstange 7 dient. Wenn am Abstreifring 2, so wie im dargestellten Beispiel, mehrere Dichtabschnitte 14 vorgesehen sind, ist es natürlich vorteilhaft, wenn auch die Anzahl der Außenumfangsnuten 17 entsprechend erhöht wird, um über die axiale Länge des Abstreifrings 2 eine möglichst gleichmäßige Vorspannung gegen die Kolbenstange 7 gewährleisten zu können. In der gezeigten Ausführung sind z.B. sechs Außenumfangsnuten 17 vorgesehen, natürlich könnten aber auch mehr oder weniger vorgesehen werden. Im montierten Zustand ist ein erstes axiales Ringende E1 des Abstreifrings 2 dem Kolben 8 zugewandt, das bedeutet, dass der Abstreifring 2 im Betrieb des Kolbenkompressors 1 vom gegenüberliegenden zweiten axialen Ringende E2 mit Schmieröl beaufschlagt wird, das an der Kolbenstange 7 haftet. Dem entsprechend sind die Abstreifkanten 15 an den Dichtabschnitten 14 dem zweiten axialen Ringende E2 zugewandt. Um die Abstreifwirkung zu verbessern, können die Dichtabschnitte 14 verschieden ausgestaltet sein, um verschiedene Abstreifkanten 15 zu erzeugen, wie später anhand Fig.8 noch im Detail erläutert wird.

Am Umfang des Abstreifrings 2 ist erfindungsgemäß zumindest eine Ausnehmung 18 vorgesehen, die den Abstreifring 2 radial durchdringt und die sich zumindest teilweise vom ersten axialen Ringende E1 in Richtung des zweiten axialen Ringendes E2 erstreckt. Die Länge der Ausnehmung 18 ist dabei so zu bemessen, dass eine gewisse Verstellbarkeit des Abstreifrings 2 in Umfangsrichtung gewährleistet wird. Diese Verstellbarkeit ist wichtig, dass der Abstreifring 2 im montierten Zustand durch die am Umfang in den Umfangsnuten 17 angeordneten Ringfedern 21 radial gegen die Kolbenstange 7 vorgespannt werden kann, sodass der Abstreifring 2 seine Abstreifwirkung entfalten kann. Die axiale Länge der Ausnehmung 18 kann dazu so bemessen werden, dass sich der Abstreifring 18 durch die Wirkung der Ringfedern 21 verformen kann, um, zumindest im Bereich des ersten axialen Ringendes E1, gegen die Kolbenstange 7 vorgespannt werden zu können. Vorzugsweise bleibt am zweiten Ringende E2 nur ein sehr kleiner Steg, beispielsweise im Bereich der Innenumfangsnutbreite a oder Dichtabschnittsbreite b, über (wie in Fig.4 angedeutet, in der ein durchgehender Steg am zweiten Ringende E2 gezeigt ist), sodass der Abstreifring 2 ausreichend flexibel ist.

Grundsätzlich kann als Material für den Abstreifring 2 auch ein Werkstoff mit geeigneten Festigkeitseigenschaften verwendet werden, der einerseits eine ausreichend hohe Stabilität des Abstreifrings erlaubt und der andererseits eine gewisse Elastizität aufweist, um die Verstellbarkeit des Abstreifrings 2 zu ermöglichen. Beispielsweise sollte sich die Ausnehmung 18 bei relativ hoher Steifigkeit des Materials weiter vom ersten axialen Ringende E1 in Richtung des zweiten axialen Ringendes E2 erstrecken, als bei einem relativ elastischen Material, um eine ausreichende Verformbarkeit des Abstreifrings 2 zu gewährleisten.

Die Ausnehmung 18 verläuft zumindest abschnittsweise in einer von der axialen Richtung des Abstreifrings 2 abweichenden Richtung, sodass sich die Dichtabschnitte 14 in axialer Richtung zumindest teilweise überdecken, wodurch verhindert wird, dass abgestreiftes Schmieröl axial ungehindert durch die Ausnehmung 18 strömen kann, wodurch die Abstreifwirkung verbessert wird.

Gemäß einer vorteilhaften Ausgestaltung der Erfindung erstreckt sich die Ausnehmung 18, so wie in Fig.2 dargestellt, allerdings nicht nur teilweise, sondern durchgehend vom ersten axialen Ringende E1 bis zum zweiten axialen Ringende E2 des Abstreifrings 2. Der Umfang des Abstreifrings 2 ist dadurch also zumindest einmal vollständig unterbrochen (in Umfangsrichtung und radial). Dadurch wird insbesondere die Verstellbarkeit des Abstreifrings 2 in Umfangsrichtung verbessert, wodurch in axialer Richtung eine sehr gleichmäßige Vorspannung des Abstreifrings 2 durch die Ringfedern 21 erreicht wird. Damit wird eine gleichmäßige Abstreifwirkung erreicht und zudem eine einfache Verschleißkompensation ermöglicht. Um die Montage des Abstreifrings 2 zu erleichtern können auch mehrere Ausnehmungen 18 vorgesehen werden, wobei diese vorzugsweise in konstanten Winkelabständen voneinander beabstandet am Umfang des Abstreifrings 2 vorgesehen sind. Im dargestellten Beispiel sind zwei diametral gegenüberliegende Ausnehmungen 18 angeordnet, wodurch zwei separate Ring-Segmente 2a, 2b resultieren.

Damit das von der Kolbenstange 7 abzustreifende Schmieröl nicht ungehindert in axialer Richtung durch die Ausnehmungen 18 strömen kann, was die Abstreifwirkung reduzieren würde, ist vorgesehen, dass die Richtung der Ausnehmungen 18 zumindest abschnittsweise von der axialen Richtung (Längsachse) des Abstreifrings 2 abweichen. Im dargestellten Beispiel verlaufen die beiden Ausnehmungen 18 helixförmig entlang der äußeren Umfangsfläche des Abstreifrings 2, wobei die Steigung der Helix vorzugsweise zwischen 0,1 und 10 beträgt, besonders bevorzugt zwischen 0,7 und 1,4. Der helixförmige Verlauf hat sich als vorteilhaft herausgestellt, ist aber nicht zwingend erforderlich. Wichtig ist lediglich, dass die zumindest eine Ausnehmung 18 zumindest abschnittsweise nicht axial verläuft, sodass in axialer Richtung eine gewisse Überlappung der Dichtabschnitte 14, insbesondere der daran vorgesehenen Abstreifkanten 15, resultiert.

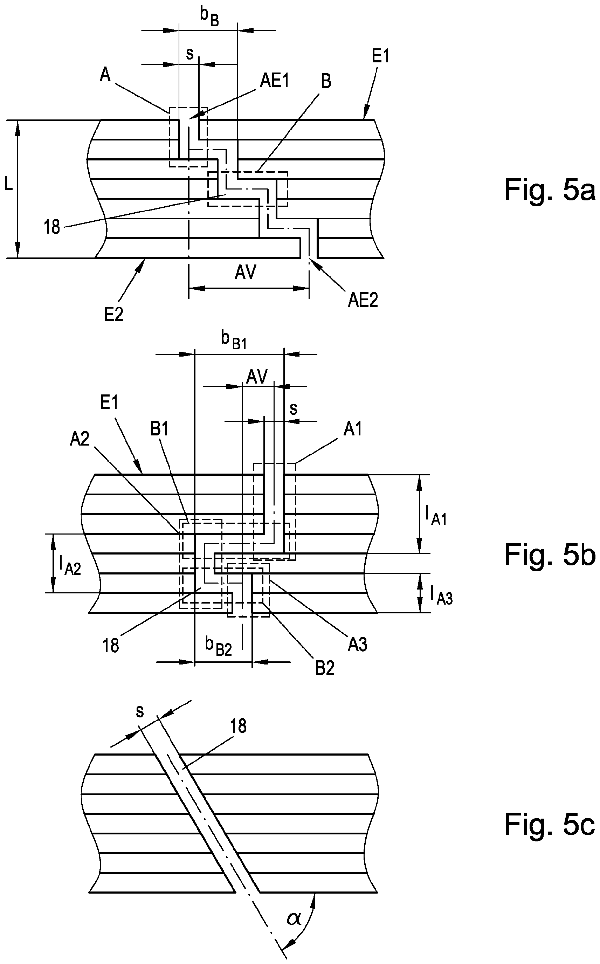

Beispielsweise könnte die Ausnehmung 18 auch entlang einer Geraden vom ersten axialen Ringende E1 des Abstreifrings 2 bis zum zweiten axialen Ringende E2 verlaufen, welche in einem bestimmten Winkel zur Längsachse des Abstreifrings 2 verläuft (Fig.5c). Um die Sperrwirkung, also das Verhindern der ungehinderten Strömung von Schmieröl vom ersten axialen Ringende E1 zum zweiten axialen Ringende E2 des Abstreifrings 2 weiter zu erhöhen, ist es vorteilhaft, wenn die zumindest eine Ausnehmung 18 stufenförmig (Fig.4+5a) oder labyrinthförmig (Fig.5b), mit wechselnden Umfangsrichtungen der Ausnehmung 18, verläuft, wobei der stufenförmige oder labyrinthförmige Verlauf auch mit dem helixförmigen oder geraden Verlauf kombiniert werden kann, so wie in Fig.2 anhand eines stufenförmigen Verlaufs dargestellt ist und im Detail noch anhand Fig.4 erläutert wird.

An der äußeren Umfangsfläche des Abstreifrings 2 sind mehrere Drainageöffnungen 19 vorgesehen, die die Innenumfangsnuten 16 mit der äußeren Umfangsfläche des Abstreifringes 2 verbinden, um über die Drainageöffnungen 19 abgestreiftes Schmieröl abführen zu können. Die Drainageöffnungen 19 können verschieden ausgeführt sein, beispielsweise als Bohrungen, Nuten, usw.

In der dargestellten bevorzugten Ausgestaltung erstrecken sich die nutförmigen Drainageöffnungen 19 in axialer Richtung vom ersten axialen Ringende E1 des Abstreifrings 2 jeweils teilweise in Richtung des zweiten axialen Endes E2. Die Drainageöffnungen 19 sind mit den Innenumfangsnuten 16 verbunden, indem die nutförmigen Drainageöffnungen 19 die Innenumfangsnuten 16 schneiden. Durch die nutförmigen Drainageöffnungen 19 werden zwischen den Drainageöffnungen 19 jeweils Ringabschnitte 26 gebildet, welche mit den Dichtabschnitten 14 verbunden sind. Die Ringabschnitte 26 verleihen dem Abstreifring 2 die nötige Stabilität und sorgen dafür, dass sich die Lage der Dichtabschnitte 14 in axialer Richtung und in Umfangsrichtung nicht ändert. Dies wirkt im Wesentlichen analog einer Verdrehsicherung, die bisher im Stand der Technik bei der Verwendung mehrerer herkömmlicher Abstreifringe erforderlich war sowie analog einer axialen Fixierung, die bisher beispielsweise mittels Stützringen erreicht wurde. Am zweiten axialen Ringende E2 können die Ringabschnitte 26 mit der Umfangsschulter 20 verbunden sein. Die Drainageöffnungen 19 dienen dazu, von den Abstreifkanten 15 abgestreiftes Schmieröl von der inneren Umfangsfläche des Abstreifrings 2 durch die Innenumfangsnuten 16 radial nach außen abzuführen. Um dies zu ermöglichen ist es wichtig, dass sich die Drainageöffnungen 19 ausgehend vom ersten axialen Ringende E1 des Abstreifrings 2 nur teilweise und nicht vollständig bis zum zweiten axialen Ringende E2 erstrecken. Am Abstreifring 2 in Fig.2 ist am zweiten axialen Ringende E2 eine sich radial nach außen erstreckende Umfangsschulter 20 vorgesehen, welche die Drainageöffnungen 19 axial begrenzt und gleichzeitig zur Fixierung der axialen Lage des Abstreifrings 2 dienen kann. So wie im dargestellten Beispiel gezeigt, können die Drainageöffnungen 19 analog der zumindest einen Ausnehmung 18 z.B. helixförmig oder gerade an der äußeren Umfangsfläche des Abstreifrings 2 vorgesehen werden. Vorzugsweise sind nebeneinanderliegende Drainageöffnungen 19 in konstanten Winkelabständen voneinander beabstandet angeordnet. Ausgenommen davon sind folglich jene Drainageöffnungen 19, zwischen welchen sich die zumindest eine Ausnehmung 18 befindet. Im gezeigten Ausführungsbeispiel sind dies die beiden Drainageöffnungen 19a und die 19b. Weiters ist es vorteilhaft, wenn die Drainageöffnungen 19 parallel zu der zumindest einen Ausnehmung 18 verlaufen, um eine möglichst gleichmäßige Stabilität des Abstreifrings 2 zu erreichen.

In Fig.3 ist der in Fig.2 gezeigte Abstreifring 2 in einer frontalen Ansicht dargestellt. In den Außenumfangsnuten 17 sind hier Ringfedern 21 angedeutet, die im montierten Zustand den Abstreifring 2 radial gegen die Kolbenstange 7 pressen. Solche Ringfedern 21 sowie deren Montage sind hinlänglich bekannt, weshalb nicht näher darauf eingegangen wird. Es ist ersichtlich, dass die Drainageöffnungen 19 einen helixförmigen Verlauf aufweisen und sich vom ersten axialen Ringende E1 des Abstreifrings 2 bis zur Umfangsschulter 20 erstrecken, die am zweiten axialen Ringende E2 vorgesehen ist. Ebenso ist erkennbar, dass die Drainageöffnungen 19, die Innenumfangsnuten 16 schneiden. Die Drainageöffnungen 19 bilden die dazwischenliegenden Ringabschnitte 26 aus, die radial innen mit den Dichtabschnitten 14 verbunden sind, um dem Abstreifring 2 die nötige Stabilität zu geben. Die (in Fig.3 nicht dargestellte) zumindest eine Ausnehmung 18 erstreckt sich wie bereits beschrieben vollständig, und zumindest abschnittsweise in nichtaxialer Richtung, vom ersten axialen Ringende E1 bis zum zweiten axialen Ringende E2 des Abstreifrings 2. Dadurch wird der Abstreifring 2 zumindest einmal vollständig am Umfang unterbrochen. Im Gegensatz zur Ausnehmung 18 könnten die Drainageöffnungen 19 auch einen axialen Verlauf aufweisen, weil diese axial von der Umfangsschulter 20 begrenzt werden, wodurch kein Schmieröl zum zweiten axialen Ringende E2 des Abstreifrings 2 gelangen kann. Der helixförmige Verlauf der Drainageöffnungen 19 hat sich allerdings als vorteilhaft erwiesen, insbesondere wenn die Drainageöffnungen 19 parallel zu der zumindest einen Ausnehmung 18 verlaufen. Weiters sind in Fig.3 die Dichtabschnitte 14 ersichtlich, die durch die Innenumfangsnuten 16 axial voneinander beabstandet sind. Die Innenumfangsnuten 16 wiederum stehen mit den Drainageöffnungen 19 in Verbindung, um das abgestreifte Schmieröl radial nach außen transportieren zu können. Ein Vorteil dieser bevorzugten nutförmigen Drainageöffnungen 19 ist, dass ein ausreichend großer Raum zum Abführen des Schmieröls geschaffen wird, sodass ein Aufstauen von Schmieröl zwischen Kolbenstange 7 und Abstreifring 2 zuverlässig vermieden werden kann, was unter Umständen die Abstreifwirkung des Abstreifrings 2 negativ beeinflussen könnte.

Der Abstreifring 2 kann beispielsweise durch mechanische Fertigung, insbesondere spanende Bearbeitung, oder durch generative Fertigungsverfahren, wie z.B. 3D-Druck, selektivem Lasersintern oder Stereolithografie, hergestellt werden und ist vorzugsweise aus einem geeigneten, insbesondere tribologisch optimierten Kunststoff, oder auch aus Metall, hergestellt. Solche Herstellungsverfahren sind im Stand der Technik bekannt, weshalb an dieser Stelle nicht im Detail darauf eingegangen wird. Denkbar wäre natürlich auch eine Kombination aus generativer und spanender Fertigung. Beispielsweise könnte ein Grundkörper des Abstreifrings 2 mittels 3D-Druck hergestellt werden, welcher im Wesentlichen nur die zentrale zylindrische Öffnung 13 und die durch die Innenumfangsnuten 16 axial beabstandeten Dichtungsabschnitte 14 aufweist. Die gewünschte Anzahl von Drainageöffnungen 19 und Ausnehmungen 18 kann in einem zweiten Schritt beispielsweise mittels eines geeigneten CNC-Fräsverfahrens am Grundkörper angeordnet werden. Wenn der Abstreifring 2 mehr als eine Ausnehmung 18 aufweist, könnte natürlich auch die dadurch entstehende Anzahl i von Ring-Segmenten 2a-2i separat gefertigt werden und erst bei der Montage zusammengefügt werden. Im gezeigten Beispiel in Fig.2 weist der Abstreifring 2 beispielsweise zwei Ausnehmungen 18 auf und besteht folglich aus zwei Ring-Segmenten 2a, 2b. Bei drei Ausnehmungen 18 wären es entsprechend drei Ring-Segmente 2a-2c, etc. Als Werkstoff wird vorzugsweise ein tribologisch optimierter Kunststoff, beispielsweise ein PTFE-basierter Kunststoff mit geeigneten Festigkeitseigenschaften verwendet, insbesondere sollte der Kunststoff auch temperaturbeständig sein, um den erwarteten Temperaturen im Betrieb standzuhalten. Auch sollte der Kunststoff ausreichend beständig gegenüber dem zu komprimierenden Medium und insbesondere dem, von der Kolbenstange abzustreifenden Schmieröl sein. Natürlich wäre es auch denkbar, dass der Abstreifring abschnittsweise aus verschiedenen Werkstoffen, insbesondere Kunststoffen, hergestellt wird, die unterschiedliche Eigenschaften aufweisen. Beispielsweise könnten die Dichtabschnitte 14, insbesondere die Abstreifkanten 15 aus einem geeigneten relativ weichen, elastischen Material ausgeführt sein, um die Oberfläche der Kolbenstange 7 nicht zu beschädigen. Der restliche Abstreifring 2 könnte aus einem anderen Werkstoff, beispielsweise einem stabileren Kunststoff oder auch einem Metall hergestellt sein.

In Fig.4 ist ein Ausschnitt des Abstreifrings 2 im Bereich einer Ausnehmung 18 in einer frontalen Ansicht dargestellt. Im Hintergrund ist eine, auf der radial gegenüberliegenden Seite des Abstreifrings 2 vorgesehene Drainageöffnung 19 ersichtlich. Der Abstreifring 2 weist im gezeigten Ausführungsbeispiel sieben Dichtabschnitte 14 auf, welche durch die Innenumfangsnuten 16 in axialer Richtung voneinander beabstandet sind. Natürlich könnten auch mehr oder weniger Dichtabschnitte 14 und Innenumfangsnuten 16 vorgesehen sein. Denkbar wäre z.B., dass bei konstanter axialer Bauhöhe L des Abstreifrings 2 die Dichtabschnittsbreite b der Dichtabschnitte 14 sowie die Innenumfangsnutbreite a der Innenumfangsnuten 16 verändert wird oder dass die Dichtabschnittsbreite b der Dichtabschnitte 14 sowie die Innenumfangsnutbreite a der Innenumfangsnuten 16 verändert wird, wodurch sich die axiale Bauhöhe L des Abstreifrings 2 verändert. Die einzelnen Dichtabschnitte 14 müssen natürlich auch nicht die gleiche Dichtabschnittsbreite b aufweisen, ebenso müssen die einzelnen Innenumfangsnuten 16 nicht dieselbe Innenumfangsnutbreite a aufweisen.

Die Ausnehmung 18 erstreckt sich vom ersten axialen Ringende E1 bis zum zweiten axialen Ringende E2 des Abstreifrings 2 und weist hier einen helixförmigen Verlauf auf. Zusätzlich ist die Ausnehmung 18 stufenförmig ausgeführt, weist also ausgehend vom ersten axialen Ringende E1 abwechselnd einen (hier) axialen Ausnehmungsabschnitt A und einen (hier) normal dazu in Umfangsrichtung verlaufenden Ausnehmungsabschnitt B auf, wie durch die gestrichelten Bereiche in Fig.4 symbolisiert ist. Natürlich müssen die Ausnehmungsabschnitte A, B aber nicht normal aufeinander stehen, sondern könnten beispielsweise auch in einem gewissen Winkel zueinander angeordnet sein. Die Anzahl n an axialen Ausnehmungsabschnitten A und Anzahl m an Ausnehmungsabschnitten B kann dabei im Wesentlichen beliebig gewählt werden und richtet sich z.B. nach der Größe des Abstreifrings 2, nach der Beschaffenheit des Schmieröls, nach den Druckverhältnissen, etc. Die Anzahl m der Ausnehmungsabschnitten B beträgt im Allgemeinen m=n-1, wobei vorzugsweise zumindest n=2 axiale Ausnehmungsabschnitte A angeordnet werden und folglich m=1 Ausnehmungsabschnitte B. Neben dem helixförmigen und stufenförmigen Verlauf der Ausnehmung 18 wären natürlich auch noch andere Verläufe vorstellbar, z.B. ein labyrinthförmiger Verlauf (Fig.5b) oder ein Verlauf in Form von diversen Kurven. Vorzugsweise wird die konstruktive Ausgestaltung der Ausnehmung(en) 18 so gewählt, dass einerseits der Durchfluss von Schmieröl zwischen den axialen Enden E1, E2 zuverlässig begrenzt wird und andererseits, dass eine möglichst einfache und kostengünstige Herstellung ermöglicht wird.

In den Fig.5a-5c sind weitere vorteilhafte Verläufe der Ausnehmung(en) 18 schematisch dargestellt, wobei der Verlauf in Fig.5a im Wesentlichen dem anhand Fig.4 gezeigten Verlauf entspricht. Die Ausnehmung 18 weist in Umfangsrichtung eine Ausnehmungsbreite s auf, die zwischen 0mm und 10mm beträgt, vorzugsweise zwischen 0,2mm und 7mm, besonders bevorzugt zwischen 0,4mm und 3mm. Die Ausnehmungsbreite s hängt dabei im Wesentlichen von der Größe und dem Einsatzgebiet des Abstreifrings 2 ab, z.B. vom Durchmesser der zylindrischen Öffnung 13 (die im Wesentlichen dem Durchmesser der Kolbenstange 7 entspricht), von der axialen Bauhöhe L, der Dichtabschnittsbreite b oder einer erwarteten Viskosität des Schmieröls. Die Ausnehmungsbreite s muss aber in keiner Ausführung der Ausnehmung 18 über die gesamte Länge der Ausnehmung 18 konstant sein. Die stufenförmige Ausnehmung 18 in Fig.5a verläuft im Wesentlichen stetig steigend vom ersten axialen Ringende E1 bis zum zweiten axialen Ringende E2. Das bedeutet, dass die durch die axialen Ausnehmungsabschnitte A und normal darauf stehenden in Umfangsrichtung verlaufenden Ausnehmungsabschnitte B gebildeten Stufen gleichmäßig angeordnet sind. Das am zweiten axialen Ringende E2 mündende zweite Ausnehmungsende AE2 der Ausnehmung 18 ist damit in Umfangsrichtung gesehen um einen gewissen Ausnehmungsversatz AV vom ersten Ausnehmungsende AE1, der im ersten axialen Ringende E1 mündet, versetzt. Die Breite der Ausnehmungsabschnitte B ist hier konstant. Der Ausnehmungsversatz AV ist im dargestellten Beispiel in Fig.5a folglich durch die Anzahl m an Ausnehmungsabschnitten B und der Ausnehmungsabschnittbreite b_{B} eines Ausnehmungsabschnitts B gebildet, wobei die Ausnehmungsabschnittbreite b_{B} im dargestellten Beispiel konstant ist (was nicht zwangsläufig der Fall sein muss). Allgemein gilt für den Ausnehmungsversatz AV des stufenförmigen Verlaufs AV=m* b_{B}.

Die Ausnehmung 18 in Fig.5b weist einen sogenannten labyrinthförmigen Verlauf auf, mit n=3 axialen Ausnehmungsabschnitten A und m=2 in Umfangsrichtung verlaufenden Ausnehmungsabschnitten B, wobei natürlich auch eine größere Anzahl n, m an Ausnehmungsabschnitten A, B angeordnet sein kann. Die labyrinthförmige Ausnehmung 18 in Fig.5b weist ausgehend vom ersten axialen Ringende E1 zuerst einen ersten axialen Ausnehmungsabschnitt A1 mit einer ersten Ausnehmungsabschnittslänge I_{A1} auf und daran anschließend einen ersten in Umfangsrichtung verlaufenden Ausnehmungsabschnitt B1 mit einer ersten Ausnehmungsabschnittsbreite b_{B1}. An den ersten in Umfangsrichtung verlaufenden Ausnehmungsabschnitt B1 schließt ein zweiter axialer Ausnehmungsabschnitt A2 mit einer Ausnehmungsabschnittslänge I_{A2} an. Daran anschließend folgt ein zweiter in Umfangsrichtung verlaufender Ausnehmungsabschnitt B2 mit einer ersten Ausnehmungsabschnittsbreite b_{B2}, an den ein dritter axialer Ausnehmungsabschnitt A3 mit einer Ausnehmungsabschnittslänge I_{A3} anschließt, der in das zweite axiale Ringende E2 mündet.

Im Unterschied zum stetig in Umfangsrichtung verlaufenden stufenförmigen Verlauf in Fig.5a erstrecken sich die in Umfangsrichtung verlaufenden Ausnehmungsabschnitte B2 zumindest teilweise abwechselnd in entgegengesetzte tangentiale Richtung. Der Ausnehmungsversatz AV entspricht im dargestellten Beispiel in Fig.5b damit der Differenz der Ausnehmungsabschnittsbreiten b_{B1}, b_{B2} der beiden tangentialen Ausnehmungsabschnitte B1, B2 (AV=b_{B1}-b_{B2}). Allgemein gilt für den Ausnehmungsversatz AV des labyrinthförmigen Verlaufs *AV* = |∑*b_{Bi}* - ∑*b_{Bj}*| mit Bi = ungerade in Umfangsrichtung verlaufende Ausnehmungsabschnitte B1, B3, ...Bi und Bj = gerade in Umfangsrichtung verlaufende Ausnehmungsabschnitte B2, B4, ...Bj. Es ist natürlich auch denkbar, den stufenförmigen Verlauf und den labyrinthförmigen Verlauf zu kombinieren.

Die Ausnehmung 18 in Fig.5c weist einen einfachen geraden Verlauf auf und ist in einem Ausnehmungswinkel α zur Umfangsrichtung angeordnet. Der Ausnehmungswinkel α beträgt dabei zwischen 5° und 85°. Vorzugsweise zwischen 20° und 60°, besonders bevorzugt zwischen 24° und 52°.

Natürlich wären für den Verlauf einer Ausnehmung 18 aber auch noch andere, als die anhand Fig.5a-5c gezeigten Ausgestaltungen möglich.

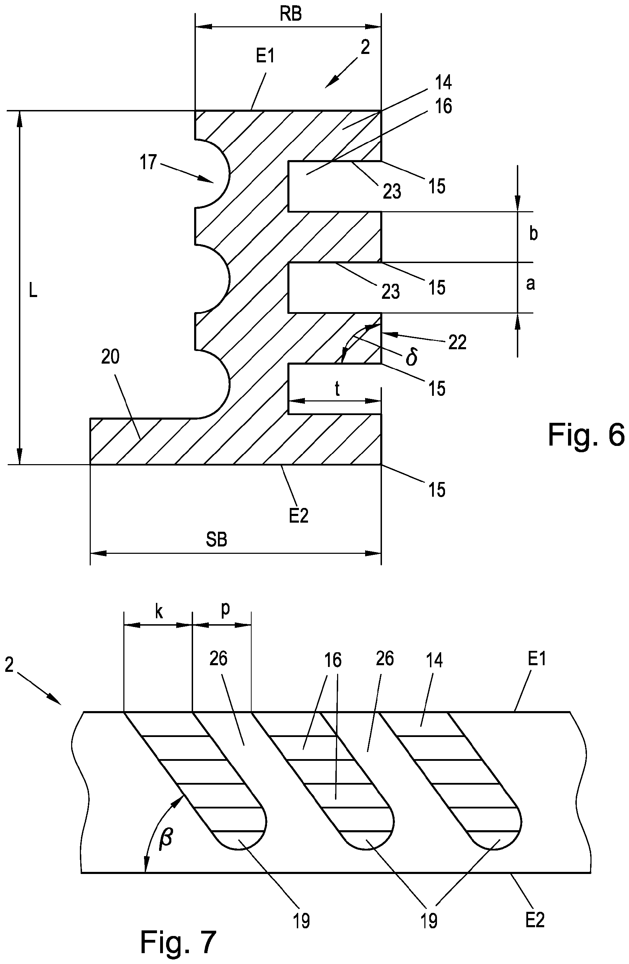

Fig.6 zeigt einen vereinfachten Querschnitt des Abstreifrings 2 an einer Stelle ohne Ausnehmung 18 und Drainageöffnung 19 und dient zur Veranschaulichung der wichtigsten Abmessungen. Der Abstreifring 2 weist eine axiale Bauhöhe L und am ersten axialen Ringende E1 eine Ringbreite RB auf. Am zweiten axialen Ringende E2 weist der Abstreifring 2 aufgrund der Umfangsschulter 20 eine, im Vergleich zur Ringbreite RB erhöhte Schulterbreite SB auf. Am äußeren Umfang weist der Abstreifring 2 zumindest eine Außenumfangsnut 17 zur Anordnung einer Ringfeder 21 auf, hier drei Außenumfangsnuten 17. Der dargestellte Abstreifring 2 weist vier Dichtabschnitte 14 mit einer Dichtabschnittsbreite b auf und drei dazwischenliegende Innenumfangsnuten 16 mit einer Innenumfangsnutbreite a und einer Innenumfangsnuttiefe t.

An den Dichtabschnitten 14 sind dem zweiten axialen Ringende E2 zugewandte Abstreifkanten 15 zum Abstreifen von Schmieröl vorgesehen. Die Innenumfangsnuten 16 und Dichtabschnitte 14 sind hier im Wesentlichen rechteckig ausgeführt. Das bedeutet, dass zwischen den radial innenliegenden Umfangsflächen 22 der Dichtabschnitte 14 und dem zweiten axialen Ringende E2 zugewandten ersten Dichtabschnittsflächen 23 ein Abstreifwinkel δ gebildet wird, der hier einem Winkel von 90° entspricht. Die Form der Dichtabschnitte 14 bestimmt also die Form der Innenumfangsnuten 16 und umgekehrt, und damit auch die Form der Abstreifkanten 15. Der Abstreifwinkel δ muss aber kein rechter Winkel sein, sondern es sind verschiedene Ausgestaltungen der Abstreifkante 15 und folglich des Abstreifwinkels δ möglich, wie nachfolgend noch anhand Fig.8a-e gezeigt wird.

Fig.7 zeigt eine schematische Darstellung von vorteilhaften Drainageöffnungen 19. Die Drainageöffnungen 19 verlaufen ausgehend vom ersten axialen Ringende E1 teilweise in Richtung des zweiten axialen Ringendes E2 und sind radial innen mit den Innenumfangsnuten 16 verbunden, um abgestreiftes Schmieröl von innen nach radial außen abzuführen. Zwischen den Drainageöffnungen 19 sind die Ringabschnitte 26 ausgebildet, die radial innen mit den Dichtabschnitten 14 verbunden sind und am zweiten axialen Ringende E2 mit der Umfangsschulter 20 verbunden sind, um dem Abstreifring 2 die nötige Stabilität zu verleihen. Es ist zumindest eine Drainageöffnung 19 am Abstreifring 2 vorgesehen, vorzugsweise aber mehrere, insbesondere zumindest sieben Drainageöffnungen 19. Die Drainageöffnungen 19 weisen jeweils eine Drainageöffnungsbreite k in Umfangsrichtung auf und sind am Umfang in einem Drainageabstand p voneinander beabstandet. Das Verhältnis k/p von Drainagebreite k zu Drainageabstand p beträgt vorzugsweise zwischen k/p=0,1 und k/p=1,5, besonders bevorzugt zwischen 0,6 bis 0,7, um zu gewährleisten, dass ausreichend Ringmaterial zwischen den Drainageöffnungen 19 vorgesehen ist, um eine ausreichend hohe Stabilität des Abstreifrings 2 zu gewährleisten. Je nach verwendetem Werkstoff können natürlich auch andere Werte für das Verhältnis k/p vorgesehen werden. Die Drainageöffnungen 19 können in axialer Richtung verlaufen, vorzugsweise sind sie aber in einem bestimmten Drainagewinkel β zur Umfangsrichtung angeordnet, wie in Fig.7 dargestellt ist. Der Drainagewinkel β beträgt vorteilhafterweise zwischen 5° und 90°, vorzugsweise zwischen 20° und 60°, besonders bevorzugt zwischen 24° und 52°. Insbesondere ist es vorteilhaft, wenn die Drainageöffnungen 19 parallel zu der zumindest einen Ausnehmung 18 verlaufen, um in axialer und tangentialer Richtung ein möglichst gleichmäßigen Verlauf von Ringmaterial zu erreichen, was für eine gleichmäßige Stabilität des Abstreifrings 2 vorteilhaft ist.

In Fig.8a-e sind schließlich mehrere Formen von Dichtabschnitten 14 und der darauf angeordneten Abstreifkanten 15 dargestellt. Der Pfeil links symbolisiert die Richtung, aus der der Abstreifring 2 mit Öl beaufschlagt wird (in den bisher gezeigten Ausführungen das zweite axiale Ringende E2). Der Dichtabschnitt 14 in Fig.8a entspricht im Wesentlichen dem gezeigten Beispiel in Fig.6 mit einem Abstreifwinkels δ von 90°. Der Dichtabschnitt 14 in Fig.8b weist ebenfalls einen Abstreifwinkel δ von 90° auf, zusätzlich ist aber eine Fase 24 zwischen der radial innenliegenden Umfangsfläche 22 und einer, dem ersten axialen Ringende E1 zugewandten zweiten Dichtabschnittsfläche 25 vorgesehen, um den Abfluss von Schmieröl zu verbessern. In den Fig.8c-e sind weitere Ausgestaltungen von Dichtabschnitten 14 und insbesondere Abstreifkanten 15 mit verschiedenen Abstreifwinkeln δ dargestellt. Im Allgemeinen beträgt der Abstreifwinkel δ im Bereich zwischen 5° und 135°, bevorzugt zwischen 20° und 110°, besonders bevorzugt zwischen 30° und 100°. Dabei muss die radial innenliegende Umfangsfläche 22 eines Dichtabschnitts 14 aber nicht zwangsläufig in axialer Richtung verlaufen, also zylindrisch sein, sondern könnte beispielsweise in einem bestimmten Neigungswinkel ε zur axialen Richtung angeordnet sein, wie in Fig.8c dargestellt ist. Natürlich könnten auch an einem Abstreifring 2 mehrere verschiedene Ausgestaltungen von Dichtabschnitten 14 mit verschiedenen Abstreifkanten 15, insbesondere Abstreifwinkeln δ und Neigungswinkeln ε kombiniert werden.

Die anhand der Fig.2-8e gezeigten Ausführungsbeispiele des Abstreifrings 2 sind natürlich nur beispielhaft zu verstehen, die konkrete konstruktive Ausgestaltung bleibt dem Fachmann überlassen, da diese von einer Vielzahl von Einflussparametern abhängt, wie z.B. dem verwendeten Schmieröl, dem erwarteten Kompressionsdruck des Kompressors (oder Verbrennungsmotors), der zu erwartenden Temperatur im Kompressorgehäuse (oder Motorgehäuse), der Baugröße und Oberflächenbeschaffenheit der Kolbenstange 7, dem verwendeten Kompressionsmedium, etc.

## Patentansprüche

1. Abstreifring (2) geeignet zum Abstreifen von Öl von einer translatorisch oszillierenden Kolbenstange (7), wobei der Abstreifring (2) mit zumindest einer an einer radial außenliegenden Umfangsfläche vorgesehenen Außenumfangsnut (17) versehen ist, wobei die Außenumfangsnut (17) zur Aufnahme einer Ringfeder (21) zum radialen Vorspannen des Abstreifrings (2) geeignet ist, wobei an einer radial innenliegenden Umfangsfläche des Abstreifrings (2) eine Mehrzahl von Dichtabschnitten (14) mit jeweils einer Abstreifkante (15) vorgesehen ist, wobei benachbarte Dichtabschnitte (14) jeweils durch eine Innenumfangsnut (16) axial voneinander beabstandet sind, wobei am Umfang des Abstreifrings (2) zumindest eine, den Abstreifring (2) radial durchdringende Ausnehmung (18) vorgesehen ist, die sich zumindest teilweise von einem ersten axialen Ringende (E1) des Abstreifrings (2) bis zu einem zweiten axialen Ringende (E2) des Abstreifrings (2) erstreckt, um zumindest im Bereich mehrerer Dichtabschnitte (14) am ersten axialen Ende (E1) des Abstreifrings (2) eine Verstellbarkeit des Abstreifrings (2) in Umfangsrichtung zu erzeugen, wobei die Ausnehmung (18) zumindest abschnittsweise in einer von der axialen Richtung des Abstreifrings (2) abweichenden Richtung verläuft, wobei an der außenliegenden Umfangsfläche des Abstreifrings (2) zumindest eine Drainageöffnung (19) vorgesehen ist, die mit zumindest einer Innenumfangsnut (16) verbunden ist, um abgestreiftes Öl von den Innenumfangsnuten (16) abzuführen, **dadurch gekennzeichnet, dass** sich die zumindest eine Drainageöffnung (19) nutförmig vom ersten axialen Ringende (E1) des Abstreifrings (2) teilweise in Richtung des zweiten axialen Ringendes (E2) erstreckt und mit mehreren Innenumfangsnuten (16) verbunden ist.

2. Abstreifring (2) nach Anspruch 1, **dadurch gekennzeichnet, dass** sich die Ausnehmung (18) durchgehend vom ersten axialen Ringende (E1) bis zum zweiten axialen Ringende (E2) des Abstreifrings (2) erstreckt, wobei der Abstreifring (2) durch die zumindest eine Ausnehmung (18) zumindest einmal vollständig unterbrochen ist.

3. Abstreifring (2) nach einem der Ansprüche 1 bis2, **dadurch gekennzeichnet, dass** am Abstreifring (2) zumindest zwei Ausnehmungen (18) vorgesehen sind.

4. Abstreifring (2) nach Anspruch 3, **dadurch gekennzeichnet, dass** die zumindest zwei Ausnehmungen (18) in konstanten Winkelabständen, voneinander beabstandet am Umfang des Abstreifrings (2) vorgesehen sind.

5. Abstreifring (2) nach einem der Ansprüche 1 bis 4, **dadurch gekennzeichnet, dass** zumindest eine Ausnehmung (18) helixförmig entlang der äußeren Umfangsfläche des Abstreifrings (2) verläuft, wobei die Steigung (k) der Helix vorzugsweise zwischen 0,1 und 10 beträgt.

6. Abstreifring (2) nach einem der Ansprüche 1 bis 5, **dadurch gekennzeichnet, dass** zumindest eine Ausnehmung (18) stufenförmig oder labyrinthförmig verläuft, wobei die Ausnehmung (18) vorzugsweise zumindest drei axial verlaufende Ausnehmungsabschnitte (A) und vorzugsweise zumindest zwei in Umfangsrichtung verlaufende Ausnehmungsabschnitte (B) aufweist, die abwechselnd angeordnet sind.

7. Abstreifring (2) nach einem der Ansprüche 1 bis 6, **dadurch gekennzeichnet, dass** zumindest zwei Drainageöffnungen (19) am äußeren Umfang des Abstreifrings (2) vorgesehen sind.

8. Abstreifring (2) nach einem der Ansprüche 1 bis 7, **dadurch gekennzeichnet, dass** zumindest eine Drainageöffnung (19) helixförmig verläuft.

9. Abstreifring (2) nach einem der Ansprüche 1 bis 8, **dadurch gekennzeichnet, dass** zumindest eine Drainageöffnung (19) parallel zur zumindest einen Ausnehmung (18) verläuft.

10. Abstreifring (2) nach einem der Ansprüche 1 bis 9, **dadurch gekennzeichnet, dass** der Abstreifring (2) zumindest teilweise aus Kunststoff hergestellt ist.

11. Abstreifring (2) nach einem der Ansprüche 1 bis 10, **dadurch gekennzeichnet, dass** der Abstreifring (2) mittels eines spanenden Fertigungsverfahrens hergestellt ist, vorzugsweise mittels Fräsen und/oder dass der Abstreifring (2) mittels eines generativen Fertigungsverfahrens hergestellt ist, vorzugsweise mittels 3D-Druck, selektivem Lasersintern oder Stereolithografie.

12. Dichtpackung (12) zur Abdichtung einer translatorisch oszillierenden Kolbenstange (7), mit einem Packungsgehäuse, in dem eine Anzahl von axial hintereinander angeordneten Dichtringen vorgesehen ist und mit zumindest einem Abstreifring (2) zum Abstreifen von Öl von der Kolbenstange (7) nach einem der Ansprüche 1 bis 11.

13. Kolbenkompressor (1) mit einem Kompressorgehäuse (3) und zumindest einem daran angeordneten Zylindergehäuse (10), in dem ein Kolben (8) translatorisch oszilliert, der mit einer Kolbenstange (7) verbunden ist und mit zumindest einem im Kompressorgehäuse (3) angeordneten Abstreifring (2) nach einem der Ansprüche 1 bis 11 zum Abstreifen von Öl von der Kolbenstange (7).

14. Kolbenkompressor nach Anspruch 13, **dadurch gekennzeichnet, dass** im Kompressorgehäuse (3) eine Dichtpackung (12) mit einem Packungsgehäuse vorgesehen ist, in dem eine Anzahl von axial hintereinander angeordneten Dichtringen vorgesehen ist, wobei der Abstreifring (2) in der Dichtpackung (12) angeordnet ist.

## Claims

1. Scraper ring (2) suitable for scraping oil from a translationally oscillating piston rod (7), wherein the scraper ring (2) comprises at least one outer circumferential groove (17) provided on the radially outer circumferential surface, wherein the outer circumferential groove (17) is suitable for receiving an annular spring (21) for radially prestressing the scraper ring (2), wherein a plurality of sealing sections (14) is provided on the radially inner circumferential surface of the scraper ring (2), each having a scraping edge (15), wherein adjacent sealing sections (14) are each spaced axially apart from one another by an inner circumferential groove (16), wherein at least one recess (18) radially penetrating the scraper ring (2) is provided on the circumference of the scraper ring (2), which extends at least partially from a first axial ring end (E1) of the scraper ring (2) to a second axial ring end (E2) of the scraper ring (2) in order to produce an adjustability of the scraper ring (2) in the circumferential direction, at least in the region of multiple sealing sections (14) on the first axial end (E1) of the scraper ring (2), wherein the recess (18) extends at least in sections in a direction deviating from the axial direction of the scraper ring (2), wherein at least one drainage opening (19) is provided on the outer circumferential surface of the scraper ring (2) which is connected to at least one inner circumferential groove (16) for removing scraped oil from the inner circumferential grooves (16), **characterized in that** at least one drainage hole (19) extends in the shape of a groove from the first axial ring end (E1) of said scraper ring (2) partially in the direction of the second axial ring end (E2) and is connected to multiple inner circumferential grooves (16).

2. The scraper ring (2) according to claim 1, **characterized in that** the recess (18) extends continuously from the first axial ring end (E1) to the second axial ring end (E2) of the scraper ring (2), wherein the scraper ring (2) is completely interrupted at least once by the at least one recess (18).

3. The scraper ring (2) according to any of claims 1 to 2, **characterized in that** at least two recesses (18) are provided on the scraper ring (2).

4. The scraper ring (2) according to claim 3, **characterized in that** the at least two recesses (18) are provided at constant angular distances, spaced apart from each other on the circumference of the scraper ring (2).

5. The scraper ring (2) according to any of claims 1 to 4, **characterized in that** at least one recess (18) extends helically along the outer circumferential surface of the scraper ring (2), wherein the pitch (k) of the helix is preferably between 0.1 and 10.

6. The scraper ring (2) according to any of claims 1 to 5, **characterized in that** at least one recess (18) is stepped or labyrinth-shaped, wherein the recess (18) preferably includes at least three axially extending recessed sections (A) and preferably at least two circumferentially extending recessed sections (B), which are arranged alternatingly.

7. The scraper ring (2) according to any of claims 1 to 6, **characterized in that** at least two drainage openings (19) are provided on the outer circumference of the scraper ring (2).

8. The scraper ring (2) according to any of claims 1 to 7, **characterized in that** at least one drainage opening (19) extends helically.

9. The scraper ring (2) according to any of claims 1 to 8, **characterized in that** at least one drainage opening (19) extends in parallel to the at least one recess (18).

10. The scraper ring (2) according to any of claims 1 to 9, **characterized in that** the scraper ring (2) is made at least partially of plastic.

11. The scraper ring (2) according to any of claims 1 to 10, **characterized in that** the scraper ring (2) is manufactured by means of a machining process, preferably by means of milling and/or that the scraper ring (2) is produced by means of a generative production process, preferably by means of 3D printing, selective laser sintering or stereolithography.

12. A sealing pack (12) for sealing a translationally oscillating piston rod (7), comprising a pack housing in which a number of axially successively arranged sealing rings are provided and including at least one scraper ring (2) for scraping oil from the piston rod (7) according to any of claims 1 to 11.

13. A piston compressor (1) having a compressor housing (3) and at least one cylinder housing (10) situated therein, in which a piston (8) oscillates translationally, which is connected to a piston rod (7) and to at least one scraper ring (2) situated in the compressor housing (3) according to any of claims 1 to 11 for scraping oil from the piston rod (7).

14. The piston compressor according to claim 13, **characterized in that** a sealing pack (12) is provided in the compressor housing (3) having a pack housing in which a number of axially successively arranged sealing rings is provided, wherein the scraper ring (2) is situated in the sealing pack (12).

## Revendications

1. Segment racleur (2) servant à racler de l'huile à partir d'une tige de piston (7) oscillant en translation, le segment racleur (2) étant pourvu d'au moins une rainure circonférentielle extérieure (17) prévue sur une surface circonférentielle radialement extérieure, la rainure circonférentielle extérieure (17) servant à recevoir un ressort de segment (21) destiné à la précontrainte radiale du segment racleur (2), une pluralité de sections d'étanchéité (14) dotées respectivement d'un bord de raclage (15) étant prévues sur une surface circonférentielle radialement intérieure du segment racleur (2), des sections d'étanchéité adjacentes (14) étant axialement espacées les unes des autres respectivement par une rainure circonférentielle intérieure (16), au moins un évidement (18), qui pénètre radialement dans le segment racleur (2), étant prévu sur la circonférence du segment racleur (2), lequel évidement s'étend au moins partiellement à partir d'une première extrémité axiale (E1) du segment racleur (2) jusqu'à une seconde extrémité axiale (E2) du segment racleur (2) afin de créer, au moins dans la zone de la pluralité de sections d'étanchéité (14) à la première extrémité axiale (E1) du segment racleur (2), une possibilité de réglage du segment racleur (2) dans la direction circonférentielle, l'évidement (18) s'étendant au moins par sections dans une direction différant de la direction axiale du segment racleur (2), au moins une ouverture de drainage (19) étant prévue sur la surface circonférentielle extérieure du segment racleur (2), laquelle ouverture de drainage est reliée à au moins une rainure circonférentielle intérieure (16) afin d'évacuer l'huile raclée à partir des rainures circonférentielles intérieures (16), **caractérisé en ce que** l'au moins une ouverture de drainage (19) s'étend en forme de rainure à partir de la première extrémité axiale (E1) du segment racleur (2) partiellement en direction de la seconde extrémité axiale (E2), et **en ce qu'**elle est reliée à plusieurs rainures circonférentielles intérieures (16).

2. Segment racleur (2) selon la revendication 1, **caractérisé en ce que** l'évidement (18) s'étend en continu de la première extrémité axiale (E1) à la seconde extrémité axiale (E2) du segment racleur (2), le segment racleur (2) étant complètement interrompu au moins une fois par l'au moins un évidement (18).

3. Segment racleur (2) selon l'une des revendications 1 à 2, **caractérisé en ce qu'au** moins deux évidements (18) sont prévus sur le segment racleur (2).

4. Segment racleur (2) selon la revendication 3, **caractérisé en ce que** les au moins deux évidements (18) sont prévus à des espacements angulaires constants, en étant espacés l'un de l'autre sur la circonférence du segment racleur (2).

5. Segment racleur (2) selon l'une des revendications 1 à 4, **caractérisé en ce qu'**au moins un évidement (18) s'étend de façon hélicoïdale le long de la surface circonférentielle extérieure du segment racleur (2), le pas (k) de l'hélice étant de préférence compris entre 0,1 et 10.

6. Segment racleur (2) selon l'une des revendications 1 à 5, **caractérisé en ce qu'**au moins un évidement (18) s'étend de manière étagée ou labyrinthique, l'évidement (18) présentant de préférence au moins trois sections d'évidement (A) s'étendant axialement et de préférence au moins deux sections d'évidement (B) s'étendant dans la direction circonférentielle, les sections d'évidement étant disposées en alternance.

7. Segment racleur (2) selon l'une des revendications 1 à 6, **caractérisé en ce qu'**au moins deux ouvertures de drainage (19) sont prévues sur la circonférence extérieure du segment racleur (2).

8. Segment racleur (2) selon l'une des revendications 1 à 7, **caractérisé en ce qu'**au moins une ouverture de drainage (19) est hélicoïdale.

9. Segment racleur (2) selon l'une des revendications 1 à 8, **caractérisé en ce qu'**au moins une ouverture de drainage (19) s'étend parallèlement à l'au moins un évidement (18).

10. Segment racleur (2) selon l'une des revendications 1 à 9, **caractérisé en ce que** le segment racleur (2) est fabriqué au moins partiellement en matière plastique.

11. Segment racleur (2) selon l'une des revendications 1 à 10, **caractérisé en ce que** le segment racleur (2) est fabriqué au moyen d'un procédé de production par enlèvement de copeaux, de préférence par fraisage, et/ou **en ce que** le segment racleur (2) est fabriqué au moyen d'un procédé de fabrication additive, de préférence par impression 3D, frittage laser sélectif ou stéréolithographie.

12. Garniture d'étanchéité (12) destinée à étanchéifier une tige de piston (7) oscillant en translation, comportant un carter de garniture dans lequel sont prévus un certain nombre de segments d'étanchéité disposés axialement les uns derrière les autres, et comportant au moins un segment racleur (2) destiné à racler l'huile à partir de la tige de piston (7) selon l'une des revendications 1 à 11.

13. Compresseur à piston (1) comportant un carter de compresseur (3) et au moins un carter de cylindre (10) disposé sur celui-ci, un piston (8) relié à une tige de piston (7) oscillant en translation dans le carter de cylindre, et comportant au moins un segment racleur (2) selon l'une des revendications 1 à 11, lequel est disposé dans le carter de compresseur (3) et est destiné à racler l'huile à partir de la tige de piston (7).

14. Compresseur à piston selon la revendication 13, **caractérisé en ce qu'**une garniture d'étanchéité (12) comportant un carter de garniture est prévue dans le carter de compresseur (3), dans lequel carter de garniture sont prévus un certain nombre de segments d'étanchéité disposés axialement les uns derrière les autres, le segment racleur (2) étant disposé dans la garniture d'étanchéité (12).
